Europäisches Patentamt

European Patent Office

Office européen des brevets

(11) Publication number: **0 269 148**
**B1**

(12) **EUROPEAN PATENT SPECIFICATION**

(45) Date of publication of patent specification: **16.01.91**

(51) Int. Cl.⁵: **B 32 B 5/22,** B 29 C 51/14, B 29 C 63/22

(21) Application number: **87202024.3**

(22) Date of filing: **21.10.87**

(54) **A method of making a shaped article from a sandwich construction.**

(30) Priority: **22.10.86 EP 86201850**

(43) Date of publication of application:
**01.06.88 Bulletin 88/22**

(45) Publication of the grant of the patent:
**16.01.91 Bulletin 91/03**

(84) Designated Contracting States:
**AT BE CH DE ES FR GB GR IT LI LU NL SE**

(56) References cited:
**FR-A-2 028 134**
**FR-A-2 192 905**
**FR-A-2 424 815**
**US-A-3 528 866**
**US-A-3 841 958**
**US-A-4 476 183**

(73) Proprietor: **Schreiner Luchtvaart Groep B.V.**
**Verbeekstraat 10-12**
**NL-2332 CA Leiden (NL)**

(72) Inventor: **Brambach, Johan Arie**
**c/o Verbeekstraat 10-12**
**NL-2332 CA Leiden (NL)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

Courier Press, Leamington Spa, England.

## Description

This invention relates to a method of making a shaped article from one or more integrated multi-layered sheets.

Especially for use in transport means, such as aircraft, motor-cars and trains, a search has long been made for materials which both are light in weight and possess high stiffness, impact resistance and strength. It has already been proposed to make sandwich constructions consisting of a completely or partly hollow core having provided thereon a fibrous synthetic layer. Such sandwich constructions possess clear advantages with regard to mechanical properties and weight when compared with massive materials.

A commercially sold product consists of, e.g., a honeycomb structure having provided on its surface a thin fibrous layer.

Although the prior art sandwich constructions possess clear advantages from a viewpoint of mechanical properties, it has been found rather difficult in practice to shape these constructions. Especially in those situations in which there is much variation in shape or in which the shape is very difficult, the problem occurs that either very difficult and time-consuming operations are required or the desired form cannot be made.

In FR—A—2,192,905 a process for the preparation of sandwich materials is disclosed. In this process a foam core and thermoplastic or thermosetting top-layers optionally containing a fibre-reinforcement, are attached to each other by the application of heat and pressure.

In EP—A—146,519 a thermoformable laminate structure is disclosed, comprising a foamed thermoplastic sheet having a cloth adhesively bonded to one surface thereof. The cloth is impregnated with a polymer having a softening temperature greater than 75°C. In the description and examples the disclosed foamed thermoplastic sheet comprises only styrene polymers.

In DE—A—24 45 700 a process for the production of a self supporting sheet of a fibre reinforced thermoplastic sheet and a soft foam is disclosed, whereby the self supporting sheet and the soft foam are attached to each other and shaped in the same process step.

It is proposed in CA—A—1,184,106 to use a sandwich material consisting of a core of a foam material having provided on its two surfaces a layer consisting of a fibrous structure impregnated with a mixture of epoxide and hardener being in the B-stage. This material can be shaped in a mould or press and hardened to obtain a product having the desired form.

With this type of materials the problem occurs that the deformation can take place only once and is not reversible. Consequently, it is not possible to accommodate a standard panel or another article afterwards to specific forms, requirements or situations.

The object underlying the present invention is to provide a method of making a shaped article from one or more integrated multi-layered sheets, which method does not have the drawbacks as described above.

This invention therefore comprises the steps of
providing a thermoplastic synthetic material reinforced with a woven fabric of fibers, said fibers having a length corresponding to the length of said sheet, on at least one side of a substantially flat sheet of thermoplastic synthetic imide foam, said woven fabric, thermoplastic synthetic material and sheet of synthetic imide foam being integrated under the influence of elevated temperature and increased pressure,

providing deformability by entirely or locally heating the resulting integrated fiber reinforced sheet, giving the heated sheet the desired structure and shape, and

fixing the article by cooling.

Another embodiment of the invention comprises a method of making a shaped article from a sandwich construction consisting at least of an integrated multi-layered sheet of a thermoplastic synthetic imide foam having attached thereto at least one woven fabric of fibers, said fibers having a length corresponding to the length of said sheet, impregnated with a thermoplastic synthetic material, which method comprises the steps of

providing deformability by entirely or locally heating the integrated multi-layered fiber reinforced sheet,

giving the heated sheet the desired structure and shape, and

fixing the article by cooling.

Surprisingly, it has been found that the invention as defined by the method described above does not have the drawbacks of the prior art. A suitable selection of the materials leads to a product having excellent mechanical properties and being very light in weight.

An important advantage of the product according to the invention is that this product is chemically stable unlike the prior art materials on the basis of thermosetting synthetics. This means that the product is not susceptible to ageing so that the mechanical properties will not decline in the course of time.

The sandwich construction obtained using the method according to the invention can be further shaped after manufacture by repeating the deforming operations according to the invention, e.g., for the purpose of accommodation to specific situations departing from the standard, but also for providing places of attachment without the occurrence of mechanical weakening. In the products obtained according to the invention an additional layer of fiber reinforced synthetic material can in fact be provided without connecting means on the surface which will form one integrated whole therewith so that an integrated local reinforcement is obtained, e.g., around a point of attachment.

It is observed that the terms "structure and shape", as used herein, can relate not only to the physical change of the form of the sheet but also to, e.g., adaptations of the sheet in order to meet specific requirements, such as local reinforcement, which do not immediately give rise to a change of the form.

According to a preferred embodiment of the method according to the invention the operations can be performed at a sheet consisting of a thermoplastic synthetic imide foam provided on one side with a layer of fiber reinforced thermoplastic synthetic material. In a simple mould this so-called half sandwich can then be shaped to the desired final form. Optionally by using varying accessories it is possible in the same mould to make a mirror-inverted half-laminate, and to bond the two separately formed sheets together via the uncoated surfaces of the thermoplastic synthetic imide foam. If desired, an optionally fibrous core of thermoplastic synthetic material, e.g., a carbon fiber-containing synthetic film, may be interposed between these two sheets. Bonding may also be effected by means of glue or adhesive tape, if so desired. This last adhesive step, too, may be performed in the same mould. It will be clear that such a method makes a great saving in the required equipment. Moreover, the time required for shaping is very short when compared with prior art methods.

The method according to the present invention offers clear advantages over the use of thermosetting materials. In the first place, the product obtained according to the present invention has greater flexibility resulting in a lower risk of hair cracks. At high load the thermosetting material may come to show hair cracks, especially after ageing, resulting from the elongation in the reinforcing fibers, so that moisture and dirt can penetrate into the fibers or the core.

Moreover, the quality of the material is properly reproducible owing to the fact that the semifinished product, the sandwich sheet, can be manufactured on an industrial scale so that also the final product is less dependent on the manual skill of the person manufacturing the product. This means that there is less spoilage. Besides, no expensive and complicated equipment is required for fixing the form.

An important advantage of the present invention is that both the semifinished product and the final product are chemically stable, i.e. not or substantially not susceptible to ageing. In contrast thereto, the thermosetting materials have the drawback that a reaction continuously takes place resulting in that the product ages. This problem occurs not only in the final product but also in the semifinished product in which the epoxy/hardener mixture is in the B-stage. The production and storage of this thermosetting semifinished product requires very close attendance, because after a rather short time already the hardening reaction has proceeded to the extent that the semifinished product is no longer useful.

According to a preferred embodiment of the method of the invention it is very easy to make edge connections between two sheets. In fact, the sheets to be connected can be easily bonded together by applying heat. A suitable selection of temperature, pressure and shaping even results in a connection showing no appreciable thickening: when the sheets are superimposed in the longitudinal direction in partially overlapping condition and then pressed together by applying heat, there is obtained by melting the synthetic foam at the joint a connection having substantially the same thickness as the sheets themselves.

The materials to be used for the present invention are the well-known thermoplastic synthetic imide foams, such as foam of polyetherimide or polymethacrylimide.

The thermoplastic synthetic material used for bonding the sheets together, and for the surface layers, is in general polyetherimide or polycarbonate. Subject to the desired temperature and chemical resistance, however, other synthetics may also be used.

The fiber reinforcement incorporated in the thermoplastic synthetic material may consist of glass fibers, carbon fibers, aramide fibers and the like. According to the invention the fibers are oriented in two directions, using a fabric having longer fibers. These fibers have a length corresponding to the length of the sheet because this will lead to the best mechanical properties.

An important advantage of the shaped articles using the method according to the invention is that the sheets have excellent flame retardant properties.

The method according to the invention can be carried out in a number of separate steps. The first step comprises providing a thermoplastic synthetic material reinforced by a woven fabric on the thermoplastic synthetic imide foam sheet. Preferably, a pre-impregnated fiber mat is started from, but it is also possible to start from a fiber mat and a synthetic material separated therefrom, the fiber mat being impregnated during manufacture. The sheet used is substantially flat, because it is most easy then to carry out the method. Bonding of the pre-impregnated fiber mat to the synthetic foam may be effected in various ways, but elevated temperature and increased pressure are always used. However, in order to obtain optimum bonding additional steps may be taken, depending on the types of thermoplastic synthetic material. In case of using, e.g., a methacrylimide synthetic foam in combination with a fiber mat impregnated with polyetherimide or polycarbonate, an additional non-fibrous film is preferably interposed between the foam and the fiber reinforced synthetic material; preferably in combination with rather shallow grooves in the synthetic imide foam. By applying heat and pressure there is obtained optimum bonding of the fibrous synthetic film to the foam. However, it is also possible to provide only shallow grooves on the foam or to use only an additional film. Also, one of these variants may be combined using a softener which, prior to bonding, is provided on one or both surfaces to be bonded together. Such a softener preferably consists of a solvent for the synthetics used, if required having dissolved therein an amount of the synthetic material used for the film. In this connection thoughts may be given to dichloromethane, etc.

In case of using a synthetic foam core having the same chemical composition as the synthetic material of the fiber reinforced film, it is in general not necessary to promote bonding by taking special steps. It may be advantageous indeed to apply a slight amount of softener, but other steps seem superfluous in general.

The temperatures used in the various operations are entirely dependent on the materials used. In this connection it is also important that both the foam and the fibers used substantially do not melt, unless this is exactly intended, e.g., for the foam: in general, while duly observing the above-mentioned limiting conditions a temperature ranging from 80 to 350°C will be maintained during operations requiring heat for providing deformability by heating the thermoplastic synthetics used.

Heating may be effected in a conventional manner, e.g., by means of radiation or hot air. In specific situations induction heating can be applied already.

After shaping the article shaped is cooled to below the softening point of the lowest softening synthetic material. After optionally repeated heating, shaping and cooling, the article is generally cooled to room temperature, or the service temperature of the article.

In the manner as described above there is obtained a semifinished product consisting of a synthetic imide foam sheet on one or both sides of which a fiber reinforced film is provided. This semifinished product can be directly shaped further in the manner according to the invention, but it is also possible to store this semifinished product and to shape it only in a much later stage. In this connection the invention also relates to the further processing of a semifinished product made in a previous stage in the manner described above.

The second and following steps of the invention therefore always comprise the heating and shaping of said semifinished product in which it is not necessary then to obtain the final form in one shaping step. Especially in the manufacture of very complicated articles this means that the shaping operation can be divided into several separate steps, which has a favourable effect on the cost, while also the extent to which the final product satisfies the specifications can be greater. More in particular, it is also possible to correct small deviations later, if required.

In this connection it is also important that larger series of identical products can be produced rather easily individual specimen of which are adapted to specific conditions later on the spot. In this connection thoughts may be given to, e.g., aircraft wall panels, of which one or two out of 100 panels must have a slightly different form or a number of additional recesses. These last different sheets can be easily shaped from the standard sheets.

The invention will now be illustrated by means of a few examples but is not restricted thereto.

### Example 1

A sandwich constructions consisting of a 4.8 mm thick polymethacrylimide foam and two outer layers of aramide fabric impregnated with polyetherimide was made by providing surfaces of the foam with shallow grooves and applying thereto on both sides an aramide fabric impregnated with polyetherimide, by means of heat and pressure. The surface of the film were softened by means of methylene chloride having dissolved therein 5% by weight of polyetherimide.

The thickness of the total construction was 5.0 mm, and the weight was 654 g/m$^2$.

Of the tensile characteristics the tensile strength was 429 MPa, the E modulus was 19 GPa and the elongation at break 2.3%.

The compression tests gave a compressive strength of 35.5 MPa and an E modulus of 5.5 GPa. The bending strength was 33 × 10$^4$ N mm$^2$/cm (ASTM C 393-62).

The resulting laminate was heated by means of radiation to a temperature (measured at the surface of the fiber reinforced synthetic material) of 300°C, after which the sandwich construction was reduced to the desired form. After cooling to room temperature there was obtained an article having a fixed form and showing no ageing, with no substantial alteration of the mechanical properties. The resulting product could be made deformable by means of heating.

### Example 2

In the same manner as described in Example 1, a sandwich construction was made using a glass fiber web instead of an aramide fabric.

The mechanical properties of an article formed from such a sandwich construction were as follows.

weight: 754 g/m$^2$
E modulus top layer 23,000 N/mm$^2$
tensile strength 1,070 N/mm$^2$
bending strength 360,000 N/mm$^2$/cm

### Example 3

Example 1 was repeated using a carbon fiber web instead of an aramide fabric.

The results were as follows:

weight 1082 g/m$^2$
E modulus top layer 74,000 N/mm$^2$
tensile strength 1000 N/mm$^2$
bending strength 870,000 N/mm$^2$/cm

**Claims**

1. A method of making a shaped article from at least one integrated multi-layered sheet, which method comprises the steps of

providing a thermoplastic synthetic material reinforced with a woven fabric of fibers, said fibers having a length corresponding to the length of said sheet, on at least one side of a substantially flat sheet of thermoplastic synthetic imide foam, said woven fabric, thermoplastic synthetic material and sheet of synthetic imide foam being integrated under the influence of elevated temperature and increased pressure,

providing deformability by entirely or locally heating the resulting integrated fiber reinforced sheet,

giving the heated sheet the desired structure and shape, and

fixing the article by cooling.

2. A method according to claim 1, in which two separately formed sheets each provided on one side with a fiber mat are bonded together with the uncoated side.

3. A method according to claim 2, wherein bonding is effected using a thermoplastic synthetic material which is optionally fiber-reinforced.

4. A method according to claims 1—3, characterized in that the steps of heating, shaping and/or cooling are repeated at least once.

5. A method of making a shaped article from a sandwich construction consisting at least of an integrated multi-layered sheet of a thermoplastic synthetic imide foam having attached thereto at least one woven fabric of fibers, said fibers having a length corresponding to the length of said sheet, impregnated with a thermoplastic synthetic material, which method comprises the steps of

providing deformability by entirely or locally heating the integrated multi-layered fiber reinforced sheet,

giving the heated sheet the desired structure and shape, and

fixing the article by cooling.

6. A method according to claim 5, in which after heating and shaping, two sheets each provided on one side with a fiber mat are bonded together with the uncoated sides.

7. A method according to claim 6, in which bonding is effected using a thermo-plastic synthetic material which is optionally fiber-reinforced.

8. A method according to claims 5—7, characterized in that the steps of heating, shaping and/or cooling are repeated at least once.

**Patentansprüche**

1. Verfahren zur Herstellung eines Formgegenstandes aus zumindest einem integrierten vielschichtigen Blatt, mit folgenden Schritten:

ein thermoplastisches Synthetikmaterial, das mit einem faserhaltigen Gewebe verstärkt ist, wobei die Fasern eine Länge aufweisen, die der Länge des Blattes entspricht, wird auf zumindest einer Seite eines im wesentlichen flachen Blattes aus einem thermoplastischen synthetischen Imidschaum angeordnet, wobei das Gewebe, das thermoplastische Synthetikmaterial und das Blatt aus synthetischem Imidschaum unter Einwirkung von erhöhter Temperatur und erhöhtem Druck integriert werden;

die Deformierbarkeit wird durch vollständiges oder lokales Erhitzen des resultierenden integrierten, faserverstärkten Blattes erzeugt;

das erwärmte Blatt wird in die gewünschte Struktur und Form gebracht; und

der Gegenstand wird durch Kühlen fixiert.

2. Verfahren nach Anspruch 1, dadurch gekennzeichnet, dass zwei getrennt gebildete Blätter, die jeweils auf einer Seite mit einer Fasermasse versehen sind, mit ihrer unbeschichteten Seite miteinander verbunden werden.

3. Verfahren nach Anspruch 2, dadurch gekennzeichnet, dass die Bindung unter Verwendung eines thermoplastischen Synthetikmaterials, welches wahlweise faserverstärkt ist, durchgeführt wird.

4. Verfahren nach den Ansprüchen 1 bis 3, dadurch gekennzeichnet, dass die Erwärmungs-, Formgebungs- und/oder Kühlungsschritte zumindest einmal wiederholt werden.

5. Verfahren zur Herstellung eines Formgegenstandes aus einer Sandwichkonstruktion, die zumindest aus einem integrierten vielschichtigen Blatt aus einem thermoplastischen synthetischen Imidschaum besteht, wobei daran zumindest ein faserhaltiges Gewebe gebunden ist, wobei die Fasern eine Länge aufweisen, die der Länge des Blattes entspricht, welches mit einem thermoplastischen Synthetikmaterial imprägniert ist, mit folgenden Schritten:

die Deformierbarkeit wird durch vollständiges oder lokales Erhitzen des integrierten vielschichtigen, faserverstärkten Blattes erzeugt;

das erhitzte Blatt wird in die gewünschte Struktur und Form gebracht; und

der Gegenstand wird durch Kühlen fixiert.

6. Verfahren nach Anspruch 5, dadurch gekennzeichnet, dass nach dem Erhitzen und dem Formgeben zwei Blätter, die jeweils auf einer Seite mit einer Fasermatte versehen sind, mit den unbeschichteten Seiten miteinander verbunden werden.

7. Verfahren nach Anspruch 6, dadurch gekennzeichnet, dass die Verbindung unter Verwendung eines thermoplastischen Synthetikmaterials, welches wahlweise faserverstärkt ist, erreicht wird.

8. Verfahren nach den Ansprüchen 5 bis 7, dadurch gekennzeichnet, dass die Erwärmungs-, Formgebungs- und/oder Kühlschritte zumindest einmal wiederholt werden.

**Revendications**

1. Procédé de fabrication d'un article façonné à partir d'au moins une feuille multicouche intégrée, lequel procédé comprend les étapes de

fournir une matière synthétique thermoplastique renforcée par un tissu de fibres, lesdites fibres ayant une longueur correspondant à la longueur de ladite feuille, sur au moins un côté d'une feuille sensiblement plate de mousse d'imide synthétique thermoplastique, ledit tissu, ladite matière synthétique thermoplastique et ladite feuille de mousse d'imide synthétique étant intégrés sous l'influence d'une température élevée et d'une pression accrue,

apporter une déformabilité en chauffant entièrement ou localement la feuille intégrée renforcée par des fibres obtenue,

donner à la feuille chauffée la structure et la forme souhaitées; et

fixer l'article par refroidissement.

2. Procédé selon la revendication 1, dans lequel deux feuilles formées séparément, munies chacune sur un côté d'un matelas de fibres, sont liées ensemble par le côté non revêtu.

3. Procédé selon la revendication 2, dans lequel la liaison est effectuée à l'aide d'une matière synthétique thermoplastique qui est éventuellement renforcée par des fibres.

4. Procédé selon les revendications 1 à 3, caractérisé en ce que les étapes de chauffage, de façonnage et/ou de refroidissement sont répétées au moins une fois.

5. Procédé de fabrication d'un article façonné à partir d'une construction en sandwich consistant en au moins une feuille multicouche intégrée d'une mousse d'imide synthétique thermoplastique sur laquelle est fixé au moins un tissu de fibres, lesdites fibres ayant une longueur correspondant à la longueur de ladite feuille, imprégné d'une matière synthétique thermoplastique, lequel procédé comprend les étapes de

apporter une déformabilité en chauffant entièrement ou localement la feuille multicouche intégrée renforcée par des fibres,

donner à la feuille chauffée la structure et la forme souhaitées, et

fixer l'article par refroidissement.

6. Procédé selon la revendication 5, dans lequel, après le chauffage et le façonnage, deux feuilles munies chacune sur un côté d'un matelas de fibres, sont liées ensemble par les côtés non revêtus.

7. Procédé selon la revendication 6, dans lequel la liaison est effectuée à l'aide d'une matière synthétique thermoplastique qui est éventuellement renforcée par des fibres.

8. Procédé selon les revendications 5 à 7, caractérisé en ce que les étapes de chauffage, de façonnage et/ou de refroidissement sont répétées au moins une fois.